# EUROPEAN PATENT APPLICATION

(11) **EP 4 685 455 A1**
(43) Date of publication of application: **28.01.2026**
(21) Application number: 24191197.3
(22) Date of filing: 26.07.2024
(51) Int. Cl.: G01N 1/36

(54) **TISSUE EMBEDDING METHOD**

(71) Applicant: IMBA-Institut für Molekulare Biotechnologie GmbH, 1030 Wien (AT)
(72) Inventor: KNOBLICH, Jürgen, 2340 Mödling (AT); REUMANN, Daniel, 1030 Wien (AT)
(74) Representative: SONN Patentanwälte GmbH & Co KG

(57) **Abstract**

The present invention provides a method for generating an array of fastened specimens comprising the steps of providing a carrier with a bottom surface that comprises an array of at least two recesses, placing at least two specimens on the carrier at the recesses, filling the carrier at least in the space between the specimens with a embedding compound, solidifying the embedding compound and fastening the specimens in the embedding compound, thereby generating an array of fastened specimens in a block of solidified embedding compound. The invention further provides a kit with means for such a method.

## Description

The present invention relates to specimen processing procedures, such as the preparation of biological tissues for thin slicing (sectioning) and high throughput multiplexed analysis.

### Background

Tissue sectioning remains the gold standard for tissue analysis for technologies such as Hematoxylin and Eosin (H&E) and antibody staining (immunohistochemistry) or transcriptomic *in situ* hybridization-based analysis, or spatial transcriptomics. However, tissue processing and analysis are non-trivial, time consuming and costly, reducing the applicability of such methods for routine applications and diagnostics.

US 6,696,271 B2 and US 6,893,837 B2 describe an array of frozen biological specimens in a frozen embedding compound with holes. First, holes are drilled into a block of embedding compound and then biological specimens are placed into the holes to generate the array.

US 8,278,034 describes making a microarray block of frozen tissue specimens by placing donor blocks of frozen tissue specimens into holes in a larger recipient microarray block.

US 2013/0252240 A1 describes a method for preparing a cryo-embedded cell concentrate.

The methods in these four patents, however, are time consuming and not practical for multiplexing of complex or heterogeneous specimens, in particular processing of multiple specimens at once. Furthermore, in the case of biopsy punch tissue grids, sectioning requires frequent thawing of the block, limiting both speed and sectioning quality significantly. There remains a need for improved multiplexed tissue processing procedures that easily allow multiplexing and cost-efficient analysis, to make tissue analysis more available.

### Summary of the invention

The invention provides a method for generating an array of fastened specimens, comprising the steps of providing a carrier with a bottom surface that comprises an array of at least two recesses, placing at least two specimens on the carrier at the recesses, filling the carrier at least in the space between the specimens with an embedding compound, solidifying the embedding compound and fastening the specimens in the embedding compound, thereby generating an array of fastened specimens in a block of solidified embedding compound.

In preferred embodiments, the invention involves the step of solidifying the embedding compound and fastening the specimens in the embedding compound (thereby generating an array of fastened specimens in a block of solidified embedding compound). This solidification can be a step of freezing the embedding compound and the specimen, or using another temperature-dependent compound such as gelatine or paraffin, thereby generating an array of specimens in a block of solidified embedding compound. According to this embodiment, the invention can also be defined as a method for generating an array of frozen specimens comprising the steps of providing a carrier with a bottom surface that comprises an array of at least two recesses, placing at least two specimens in the carrier at the recesses, filling the carrier at least in the space between the specimens with a embedding compound, solidifying or freezing the embedding compound and the specimens, thereby generating an array of frozen specimens in a block of frozen embedding compound.

In a further aspect, the invention provides an array of fastened (e.g. frozen) specimens in a block of solidified (e.g. frozen) embedding compound generated by a method of the invention.

In another aspect the invention provides a kit comprising a carrier with a bottom surface that comprises an array of at least two recesses and the carrier further comprises a wall surrounding the bottom surface; and the kit further comprising embedding compound comprising polyvinyl alcohol, polyethylene glycol, glycol, paraffin, agarose, and/or gelatine.

All aspects of the invention are related to each other, and all optional or detailed embodiments relate to all aspects even when only described for one. E.g. any or all compounds or means described for the method can be included in the kit. Components and means of the kit can be used in the inventive method. The array may be the result of any embodiment of an inventive method. Any property of the array may be caused by the method, i.e. the method may be adjusted to provide such arrays.

### Detailed disclosure of the invention

The invention provides a method for generating an array of fastened or frozen specimens. The method uses a carrier with a bottom surface that comprises an array of at least two recesses. The surface is referred to as "bottom surface" since in the inventive method further layers or material are placed onto it, then the surface of the carrier is at the bottom. The bottom surface may not be the lowest point in the entire set-up. A deepest depression in the recesses may be the lowest point or bottom that is used to place material on top of. It is usually placed horizontally in the method to carry further materials, especially the specimens and the embedding compound. The recesses are depressions in the bottom surface that form lower points than the bottom surface, which is usually flat, apart from the recesses. The carrier is also referred to as "mold" herein. The array is also referred to as multiplexed tissue array or multiplexed tissue mold (MTM) herein when used on multiple biological specimens. The bottom surface of the carrier can optionally also be flat.

"Specimen" herein refers to sample material where sectioning is useful to reveal material features from within the material. Specimens are e.g. biological samples, such as biological tissues, hydrogels (such as decellularized extracellular matrix, Matrigel, artificial or partially artificial hydrogels such as PEG (polyethyleneglycol), HAMA (hyaluronic acid methacrylate), GelMA (gelatin methacrylate) and others, which might be functionalized or loaded with functional components), and other materials which can be sectioned and where thin sectioning provides relevant insights, such as e.g. materials made out of plastic, rubber or plant material. Biological samples are preferred for all embodiments of the invention, especially biological tissues are even more preferred as specimen.

Then at least two specimens are placed on the carrier at the recesses, i.e. specimens are placed in the recesses; in particular, different specimens are placed in at least two recesses. The specimens may be 3D and stick out at the top of the recesses or they can be small and/or flat enough to remain below the top of the recesses, i.e. they may not extend upwards of the level of the bottom surface. Usually, they extend upwards beyond the level of the bottom surface and stick out at the top of the recesses. One or optionally more than one specimen is placed into one recess, such as 2, 3, or 4 or more specimens are placed into one recess. The recesses help to hold the specimen at a particular position by gravitational force, i.e. at the position of the recess in the array, in particular in the step of positioning the specimen in the recesses before the pre-freezing step. Thus, the density of used embedding compound could be lower than the density of specimens to allow specimens to sink down into the recess. This particularly helps to prevent dislocations, especially when using large arrays with many recesses and many specimens. The embedding compound which holds the specimen in the recesses can then be pre-solidified or pre-frozen by e.g. cooling the carrier, which holds the specimen in place for the next step in which the carrier is filled up with embedding compound. In this stage, it is beneficial that the embedding compound does not completely solidify to allow further added embedding compound in the next step to adhere to embedding compound which coats the recess and specimen. This step prevents movement of specimen (e.g. tissue) itself in the next step, where the carrier is filled at least in the space between the specimens with an embedding compound. Preferably, the specimens are entirely coated in the embedding compound. Particularly preferred, the recesses are filled with the embedding compound. If the specimens stick out of the top of the recesses, then preferably further embedding compound is added to entirely engulf the specimens. The carrier may have a side wall, that surrounds all recesses, that allows filling the carrier within the side walls and engulfing the specimens even outside the recesses. Embedding compounds are known in the art and they are materials that are fluid at the temperature of filling, usually room temperature, e.g. 20°C or at higher temperatures, such as 60°C, and which can be solidified at lower temperatures, such as at -10°C or lower in the case of cryo-embedding compounds, or room temperature in the case of gelatine solution, agarose solution, agar-agar solution or paraffin. High melting embedding compounds, such as the ones being fluid at e.g. 60°C like paraffin, can be a solid at room temperature, e.g. at 20°C. Example embedding compounds are paraffin or cryosectioning compounds, like polyvinyl alcohol and/or polyethylene glycol, or gelatine solution (such as 2% gelatine solution in PBS), agar (such as 2% Agar in PBS), or other polymerizing or gelling hydrogels or waxes. Contrary thereto, the carrier is solid at the different temperatures throughout the method (e.g. 20°C for filling and -10°C or lower for solidifying (freezing) or alternatively 60°C for filling and 20°C for solidifying (freezing) in case of paraffin or gelatine). Paraffin is usually used to fasten dehydrated specimens such as dehydrated biological specimens. Accordingly, the inventive method may also comprise a step of dehydrating the specimens in a series of alcohol (for example, 30%, 50%, 70%, 100% alcohol in water mixture) prior to the step of filling the carrier at least in the space between the specimens with embedding compound (which is performed e.g. in Paraffin embedding). Paraffin-fastened specimens are usually processed with vibratome sectioning. Specimens that are frozen in an embedding compound that is a cryo-sectioning compound (with a melting point below 0°C) are usually processed by cryo-sectioning in a cryostat.

Next in the method, the specimens are fastened in the embedding compound by solidifying the embedding compound. Fastening refers to limiting the specimens' movement in the solidified embedding compound. This may also serve to preserve the specimens, e.g. by covering the specimens with the embedding compound. Therefore, fastening in the solidified embedding compound with specimen may include embedding in the embedding compound. Preferably, the embedding compound and the specimens are frozen, thereby generating an array of frozen specimens in a block of frozen embedding compound. Freezing is a solidification of the embedding compound. It is a lowering of the temperature below the crystallization or polymerization or solidification point of the embedding compound. Preferably it is a quick solidifying/freezing process for faster handling. A quick solidifying/freezing process can be facilitated by lowering the temperature further beyond the melting point, such as at least 10°C, preferably at least 20°C, even more preferred, at least 30°C, below the melting point of the embedding compound. In preferred embodiments, the embedding compound is solidified or frozen within 10 minutes, preferably within 6 minutes, even more preferred within 4 minutes. A quick-freezing process helps to avoid water crystal formation, which would disrupt the specimens (e.g. tissues) and would create freezing artefacts. In particular preferred embodiments, the specimens are frozen within 2 minutes, preferably within 1 minute, even more preferred within 30 seconds. In some embodiments, especially for cryo-sectioning compounds, solidifying/freezing comprises solidifying/freezing at -50°C or lower; in especially preferred embodiments it comprises solidifying/freezing on dry ice or in liquid nitrogen. For example, it is possible to use a heat pump or Peltier-based cooling device to rapidly cool the carrier and the embedding compound with the specimens. Alternatively, or in combination, it is preferred to place the carrier on a cooling device with a high thermal conductive material contacting the carrier (e.g. a metal block), which accelerates the freezing process.

The inventive method is preferably performed at about atmospheric pressure, e.g. about 101,325 Pa.

In an alternative embodiment, the carrier may have a flat bottom. The flat bottom is without the recesses, i.e. entirely flat. In such a method preferably the array of specimens is generated by placing the specimens on the bottom surface, which is now a flat bottom, and carefully not displacing them from the placed position. Displacement may be prevented by adhesion, e.g. using an adhesive compound, using a material for the carrier that has adhesion to specimens or pre-fastening or pre-freezing the outside of the specimens with small amounts of embedding compound, and then once the pre-fastened or pre-frozen specimens stick to the carrier, then the method continues with filling the space between the specimens with embedding compound. The inventive method can then be defined as a method for generating an array of fastened or frozen specimens comprising the steps of providing a carrier with a bottom surface, placing at least two, especially preferred at least four, more preferred at least 8, even more preferred at least 12, even more preferred at least 20, specimens coated with embedding compound onto the carrier, pre-solidifying the specimen preferably at array positions, filling the carrier at least in the space between the specimens with embedding compound, preferably filling the space between and above and below the specimen with embedding compound, solidifying/freezing the embedding compound and the specimens, thereby generating an array of fastened or frozen specimens in a block of solidified or frozen embedding compound.

The method with the recesses is of course preferred for all embodiments. The recess may be a continuous depression from the carrier bottom surface. The recess may have a deepest depression and at least one slope that descends (negative elevation) to the deepest depression. The at least one slope is descending to the deepest depression. The slope might be at -90° to the level of the carrier surface. The slope is preferably not at -90° to the level of the carrier surface. Preferably the slope is at an angle of -1° to -30°, preferably -3° to -20°, even more preferred to the bottom surface of the carrier. Such inclined slopes additionally help to prevent the formation of air bubbles being trapped within the solidified embedding compound. The slope might be curved to assist the tissue to sink down to the center position. The slope may refer to a tangent of the recess at the junction of the recess to the carrier bottom surface or a tangent at half the depth of the recess. In other words, the recess may have a descent from the bottom surface of the carrier to the deepest point (deepest depression) wherein the continuous descent is always not at a right angle to the bottom surface. Preferably the non-right angle is as described above for the slope at -1° to -30°. The recess may have walls, i.e. further inclinations, on sides that are not along the slope. In other embodiments the recess is a well or a depression with walls that are at an angle of -90° to the carrier bottom surface.

The circumference of the recess may have a circular or partial circular shape, such as semi-circular shape, a rectangular or an elliptic shape. In some embodiments, the slope is at the non-90° slope towards the deepest depression from all points of the circumference. In other embodiments, the slope is at the non-90° slope towards the deepest depression for 50% or less of the circumference. In other embodiments, the slope is at the non-90° slope towards the deepest depression for 50% or more of the circumference.

In preferred embodiments, the recess has a length of 1 mm to 40 mm, preferably 2 mm to 30 mm, especially preferred 3 mm to 20 mm, and/or a width of 1 mm to 40 mm, preferably 2 mm to 30 mm, especially preferred 3 mm to 20 mm. Also possible are smaller widths than lengths, such as a width of 0.5 mm to 16 mm, preferably 1 mm to 12 mm. Length and width are dimensions in the plane of the bottom surface of the carrier. Such dimensions are usually suitable to accommodate the most common specimens, such as biopsy specimens, tissue specimens, organoids, plants or plant parts, or other three-dimensional specimens, like hydrogels, which benefit from sectioning. Larger dimensions and tissue-guided recesses can be created to assist spatial positioning of specimens (e.g. tissues).

The recess may have a depression (e.g. depth from the bottom surface of the carrier) of at least 0.2 mm, preferably at least 0.5 mm or even more preferred at least 1 mm. In some embodiments such a depression extends over a specified size of the recess, such as over a length of at least 0.5 mm, preferably at least 2 mm. Due to the slope, the depression/depth may vary but in these preferred embodiments, the specified depression/depth is preferably adhered to over at least the specified dimensions. The recess depression might be designed to allow specimen to sink down to the center point, but also be flat enough to allow simultaneous processing of specimen which are not entirely centered into the recess. Preferably, the recess has a depth from the bottom of the carrier of 0.1-10 mm, even more preferred 0.2-2 mm, most preferred 0.4-0.8 mm.

In preferred embodiments, in a cross-sectional view of the carrier, the at least one slope comprises a region with a length of at least 2 mm in which all tangents to the slope enclose an angle between 1° and 30° with a top surface / top side of the carrier. Thus, in a significant part of the recess/the depression, the slope of the depression is at an angle from 1° to 30°. The top surface / top side is considered as a horizontal plane. Thus, the angle can also be regarded as 1° and 30° to the horizontal plane. The angle is preferably 2° to 20°, especially preferred 3° to 15°. The recess may have a curved depression as mentioned above, such as with a tangent at these angles e.g. at a junction to the carrier bottom surface or at half the depth. The recess is usually horizontal (parallel to the carrier bottom surface) at its bottom (deepest depression).

The array of at least two recesses corresponds to positions in the array of fastened or frozen specimens, i.e. the recess positions correspond to specimen positions. The array of the recesses (and hence the array of specimens in the product) can follow a grid for easy position identification in the final product (the array of fastened or frozen specimens).

The specimens are placed into the recesses. The recesses assist positioning, e.g. along the x and y and z axis, and restrict movement of the specimens with a push by gravity towards the centre of the recesses. In preferred embodiments, the method might comprise a step of pre-fastening (also referred to as pre-solidifying or pre-freezing) the embedding compound-coated specimens through cooling the embedding compound (e.g. by cooling the carrier), and then once the pre-fastened or pre-frozen specimens stick to the carrier or recess, filling the space between the specimens with a embedding compound. Especially preferred the step of "placing at least two specimens on the carrier at the recesses" comprises a step of pre-fastening the at least two specimens on the carrier with a layer of embedding compound. Preferably this pre-fastening step is performed before the step of "filling the carrier at least in the space between the specimens with a embedding compound". Pre-fastening can be freezing the embedding compound and is then referred to as pre-freezing. This pre-fastening or pre-freezing step reduces or prevents movement of the specimens when liquid embedding compound is filled onto the carrier, while not completely fastening or freezing the specimen (e.g. tissue) itself. Ideally, pre-fastening or pre-freezing should not be completed before continuing with the next step, and solidification/freezing should only occur on the embedding compound surrounding the specimen but should not freeze the entire specimen itself. Indeed, it has been noted by the inventors that the recesses themselves, especially when used in combination with the pre-fastening or pre-freezing step, offer ample protection against specimen displacement when the carrier is filled with liquid embedding compound.

Preferably the carrier has a wall surrounding the bottom surface. The wall can be a barrier for the liquid phase of the embedding compound and allow a higher filling level above the bottom surface of the carrier, which can help to cover the specimens with the embedding compound. The method preferably comprises filling a space between specimens and the wall with embedding compound. Preferably the embedding compound is filled to a level of at least the height of the top of the specimen, or above the height of the top of the specimen, e.g. 0.5 mm to 10 mm, above the top of the specimen. Especially preferred, the embedding compound is filled to a level of at least 0.5 mm, more preferred at least 1 mm, above the top of the specimen. In combinable of alternative embodiments, the embedding compound is filled to a level of at least 2 mm, e.g. 2 mm to 15 mm, above the bottom surface of the carrier (not counting the depressions of the recesses). Especially preferred, the embedding compound is filled to a level of at least 2.5 mm, more preferred at least 3 mm, above the bottom surface of the carrier. The height of the walls may be the at least 2 mm, e.g. 2 mm to 15 mm, preferably 8 mm to 12 mm, above the bottom surface of the carrier (not counting the depressions of the recesses).

Preferably the method comprises placing a cover sheet on top of the carrier after filling the carrier with liquid embedding compound. A cover sheet, which can be a lid, can be used to flatten the embedding compound to produce a flat surface in the produced solidified or frozen block. The space between the bottom surface of the carrier and the cover sheet can be filled with embedding compound. This filling from bottom (bottom surface of the carrier, including recesses) to top (immediately below the cover sheet) is usually done on top of the specimens and the spaces between the specimens. This means that there is always embedding fluid between the specimens at each plane parallel to the bottom surface of the carrier and/or to the cover sheet. This has the beneficial consequence that when the solidified block is cut (sectioned) parallel to the bottom surface or the cover sheet that between each specimen slice an embedding compound is present to hold the entire slice in one plane together and prevent the slice from falling apart. Such a slice is more conveniently processed, such as during staining and/or analysing. Also, embedding compound is preferably covering the top of the specimen so that they are completely engulfed by embedding compound. This improves preservation of the specimen and prevents or reduces damage, especially in case of biological specimen, like tissue samples.

For the procedure of solidifying or freezing the embedding compound, the carrier preferably is positioned in a freezing chamber or freezing device, preferably below -60°C and onto a high thermal conductive, horizontal surface, preferably on a horizontal metal block on dry ice. The pre-fastening or pre-freezing is then performed, the carrier filled up with embedding compound and a cover sheet, which can be a lid, which can be the same as described in the paragraph above and can be reused, is pressed on to create a flat surface after freezing. Preferably, the cover sheet/lid is designed of a material which is re-usable and easily detaches from solidified embedding compound (e.g. frozen cryo-embedding compound), preferably out of s non-stick PTFE. Preferably, the cover sheet/lid is designed out of a material of high thermal conductivity and accelerates solidification/freezing speed of the embedding compound. Preferably, the circumference of the lid is larger than the circumference of the top of the carrier and, if pressed on, permits release of surplus embedding compound from the side, which can be removed after solidification/freezing. In other embodiments, the cover sheet has outer dimensions similar or larger to those of the carrier to fit onto the carrier, especially to fit on top of the carrier. Preferably the cover sheet is pressed onto, not into the volume inside the walls of the carrier. This minimizes embedding compound displacement. The volume inside the wall of the carrier is preferably filled to the top with embedding compound. The dimensions of the cover sheet may be about 25 mm x 55 mm, similar to the carrying space of a microscopic glass slide, or larger, e.g. larger by 1-10 mm on each side. The lid may be of a solid material, similar or the same as the carrier; preferably of a non-stick material, preferably PTFE.

In particular preferred embodiments, the method comprises removing the block of solidified or frozen embedding compound from the carrier, and filling a space between elevations with embedding compound, which elevations correspond to the filled recesses. When removing the block of solidified or frozen embedding compound from the carrier, it will have elevations where the embedding compound and the specimens have been in the recesses. In order to produce a flat block without these elevations, the space between elevations with embedding compound can be filled with additional embedding compound. Filling is done by reverting the orientation of the solidified embedding compound block with tissues, re-positioning it into the carrier (the block is flipped over), adding embedding compound on top of the carrier and letting it solidify. Optionally and preferably after flipping the block, gently pressing on a cover sheet, which can be a lid, and letting the embedding compound solidify, to create a flat surface. In order to avoid damage to the specimens, solidifying/freezing should be quick and the solidified or frozen bock with the tissues should be kept at a low temperature, such as at the above-mentioned temperature, preferably on dry ice or in an ultra-low temperature freezer (-80°C) in the case of tissue for cryo-sectioning.

This filling between the elevations can be done in a mold, which can be the same carrier as used in the preceding steps or a different carrier. Preferably, the removed block is flipped over with the tissue side facing upwards and the flipped block is placed into a carrier with walls that fit the block, then the space between elevations is filled with embedding compound.

Preferably, a cover sheet is placed on the flipped block with embedding compound filled spaces. The cover sheet can be a lid. It can be placed onto the flipped block onto which embedding compound has been applied to generate a smooth surface at the specimen and/or between specimen. This step may be omitted if a flat bottom carrier is used or no smooth surface is needed. A smooth surface is of course preferred as it eases handling during the cutting step since the first slices will be produced with a more homogenous thickness, and prevents cutting of only the individual parts corresponding to the individual recesses/wells (with specimens) into separate sections. The filled spaces between recesses hold these separate parts together and forms one homogeneous section when performing slicing/sectioning, like cryo-sectioning or vibratome sectioning. It is beneficial in this step that the temperature difference between solidified (e.g. frozen) and liquid embedding compound is not too high, to allow the embedding compound to form a homogeneous material. Heating the side of recesses of the solidified (e.g. frozen) block in this step to almost melting temperature can assist to create a continuous block when adding more embedding compound. The heating of the recess derived structures might be performed by pressing the block against a warm surface such as the palm of a hand (which might be covered with a glove) or using a heatgun. The side of sheet or lid that contacts the flipped block is preferably also smooth to generate the smooth surface on the block after filling with embedding compound and solidifying or freezing.

The carrier bottom surface may have a groove surrounding (and encircling) the recesses. The groove leads to a protrusion of embedding compound when filled with embedding compound and solidified. This protrusion may help to fill the spaces between the recess with embedding compound when flipped over. Preferably, the carrier has a bottom surface with an array of at least 4, preferably at least 6 or more, preferred at least 8 recesses, even more preferred at least 12 recesses, especially preferred at least 18 recesses or even at least 21 recesses. There may be up to 300 recesses, or up to 100 recesses in adapted carriers. The recesses can be arranged in a rectangular array, such as oriented by column and line, e.g. 2x4, 2x6, 3x4, 3x6, 3x8, 4x8, 4x12 etc., or in a squared array, such as 4x4, 8x8, 16x16.

Preferably, the recesses have a depth relative to the bottom surface of 0.1 mm to 30 mm, preferably 0.2 mm to 10 mm, even more preferred 0.3 mm to 5 mm.

The embedding compound is a material that can be liquidized to fill the carrier and it can be solidified (e.g. by freezing) to create the block of embedded specimens. At both states (liquid/solid) the temperature shall be suitable to accommodate the specimen that is embedded. For biological samples as specimens, low temperatures are preferred. The embedding compound is usually a material that does not produce specimen-disrupting crystals during solidifying. The embedding compound is usually amorphous in the solid state. Preferably, the embedding compound is a tissue embedding compound. In preferred embodiments the embedding compound comprises polyvinyl alcohol and/or polyethylene glycol or paraffin. These are suitable tissue embedding compounds. The embedding compound can be an OCT (optimal cutting temperature) compound, such as Sakura Finetek Tissue-Tek O.C.T. Compound, FisherScientific cat.no. 12351753. Further embedding compounds are disclosed in Ruan et al., Tissue Engineering C, 2013, 19(10): 794-801. Preferred embedding compounds are selected from bovine serum albumin (BSA), fetal bovine serum (FBS), polyvinyl alcohol (PVA) or combinations thereof. A preferred embedding compound is a formulation of 10.24% polyvinyl alcohol, 4.26% polyethylene glycol and 85.5% nonreactive ingredients (all wt.-%), such as Scigen O.C.T. Compound Cryostat Embedding Medium. In further preferred methods, the embedding compound comprises a carbohydrate, preferably a polycarbohydrate, gelatine or agarose (WO 2008/054421 A2). In particular preferred embodiments, the specimen is treated with a cryoprotectant, such as a carbohydrate solution, before contacting with the embedding compound in the filling step. A cryoprotectant helps to reduce or prevent (water) crystal formation which can disrupt specimen microstructures. The carbohydrate solution may comprise 10%-50% of a carbohydrate (all wt.-%). A carbohydrate can be a monosaccharide, a disaccharide, an oligosaccharide or a polysaccharide or mixtures thereof. A preferred carbohydrate is sucrose.

Preferably, the carrier is flexible with a Young's modulus of elasticity of 0.1 MPa to 4,000 MPa, preferably 100 MPa to 1,000 MPa, at 20°C. Especially the carrier is flexible with a Young's modulus of elasticity of 1 MPa to 2,000 MPa, preferably about 500 MPa, at 20°C. Flexibility allows easier handling. Particularly preferred, the carrier is flexible at the solidifying or frozen temperature, such as -50°C or at -60°C or at -70°C, this allows bending of the carrier to remove the array of frozen specimens in a block of solidified or frozen embedding compound. Preferably, the carrier contains or is of polytetrafluoroethylene (PTFE). PTFE has a good balanced flexibility that allows stable carriers with good practicable handling due to its flexibility, even at low temperatures.

The specimen may be a biological specimen, especially a biological sample, such as a tissue. Before placing on the carrier, the specimen, particularly tissue, can be fixed, such as by formaldehyde and/or glutaraldehyde treatment or acetal or methanol treatment. Fixing a specimen, e.g. a tissue, by acetal treatment can be done according to US 2017/0191909 A1. Fixing can comprise crosslinking of molecules in the specimen, such as with formaldehyde or glutaraldehyde solution. Preferably, bone-derived or calcified tissues as specimen may be decalcified before placing on carrier to ease subsequent sectioning.

Preferably, the method comprises removing the block of solidified or frozen embedding compound with the specimens from the carrier and placing it in a storage freezer. This allows long-term storage of the block. The block of solidified frozen embedding compound (which contains the specimens within) may be placed in another air-tight container which limits freeze drying (freeze burn), such as a bag or foil, for storage. The carrier can then be reused for other purposes, such as fastening or freezing more specimens. Preferably, the method comprises removing the block of solidified or frozen embedding compound from the carrier and reusing the carrier for another iteration of generating an array of fastened or frozen specimens.

Preferably, the method comprises cutting one or more slices from the block (the array of fastened or frozen specimens in a block of solidified or frozen embedding compound), wherein the slices comprise parts of the specimens of the array. This method of cutting is also referred to as sectioning. It can be done in a cryostat and is then referred to as cryo-sectioning. Slicing methods and apparatuses are e.g. disclosed in US 2016/0084741 A1. Slices preferably have a thickness of 1 µm to 200 pm, preferably 2 µm to 150 pm, even more preferred 3 µm to 100, or up to 50 pm, most preferred of about 20 µm for cryo-sectioning. For cryo-sectioning, such thicknesses of about 10 µm to 50 pm, especially about 20 pm, allow good use in a microscopy and still have good stability during cutting and subsequent labelling protocols. Cutting is preferably done at a solidified or frozen state of the embedding compound. Low temperatures are also preferred to preserve the specimens. In preferred embodiments the temperature of the block during cryo-sectioning is -10°C to - 100°C, e.g. -13°C to -40°C. A cutting knife may be used for cutting. The knife is preferably also at a low temperature, such as at -5°C to -100°C, preferably -13°C to -40°C. For vibratome sectioning of paraffin sectioning, about 1-6 µm section thickness at room temperature, or 20°C ± 5°C are preferred.

The slices are preferably transferred on a positively charged microscopy slide and can then be processed for tissue analysis, such as stained with fluorescently tagged antibodies, such as in immunohistochemistry, or nucleic acids, such as for *in situ* hybridization-based analysis, or extraction of nucleic acids for spatial transcriptomics, or dyes such as in H&E (hematoxylin and eosin stain) and cell painting, e.g. staining with one, two, three or more fluorescent dyes. The specimens and parts therein can react differently to hybridizing reagents or stainings, allowing the visualization or analysis of specimen components and features. Further uses of the slices include visualization, e.g. by microscopy of features of the specimens, such as microscopy of expressed fluorophores, antibody labelling, *in situ* hybridization for RNA detection, processing for spatial transcriptomics, further types of stainings (e.g. cell painting), chemical or mechanical composition characterizations (e.g. by Raman microscopy, Brillouin microscopy), tissue dyes (e.g. H&E) or autofluorescence. The slices may be put on a microscopy slide, in particular with all the sliced parts of the specimens in one plane of the block. Such a microscopy slide might be positively charged to hold tissue adhered to the glass. A microscopy slide might have a standard size such as 25x75mm, or might be larger or smaller to adapt to custom MTM designs for larger or smaller specimen grids.

The invention further provides an array of fastened or frozen specimens in a block of solidified or frozen embedding compound generated by a method of the invention. The block may have the array of the specimens in it, especially in an array of rectangular arrangement, as described above. E.g. 10 or more, preferably 12 or more, or 16 or more, or 20 or more, specimens are in the array. In the array, all the specimens can be fastened in the same geometric plane. Thus, if the block is cut, all specimens are cut simultaneously from the same starting point (z position). The fastened or frozen specimens in the array may differ in size and/or shape. By placing them in the recesses (which are in the same geometric plane), the specimens are placed in suitable positions for simultaneous processing, like slicing. One advantage of the inventive array is that the generation of the array does not require/involve repeated cycles of solidifying and liquifying the specimens, in particular does not require/involve repeated cycles of thawing and freezing specimens during processing.

The invention further provides a kit with a carrier with a bottom surface that comprises an array of at least two recesses and the carrier further comprises a wall surrounding the bottom surface; and the kit further comprises an embedding compound comprising polyvinyl alcohol, polyethylene glycol, glycol, paraffin, agarose, and/or gelatine. The kit may have any other component mentioned above or further herein, such as a cover sheet or lid. The kit may also comprise a pretreatment fluid for the specimens comprising the carbohydrate as mentioned above. The kit may further include components such as fixation fluid, e.g. formaldehyde or glutardialdehyde or methanol, and/or a decalcification solution (such as formic acid solution).

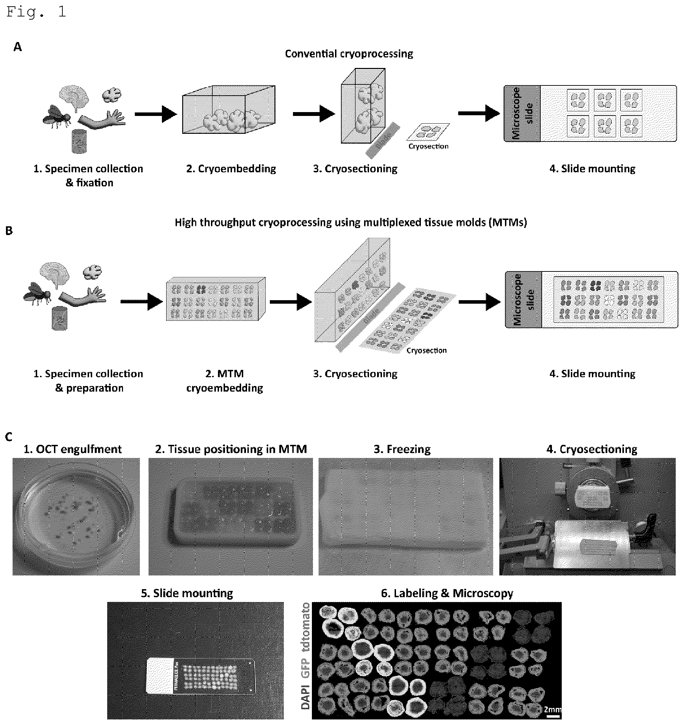

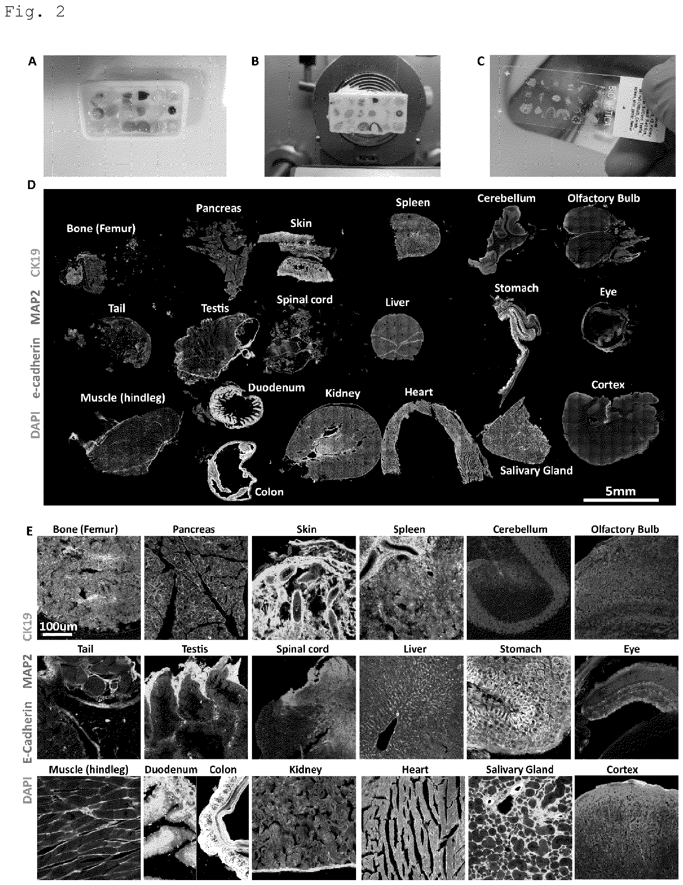

In further embodiments, individual staining chambers can be located for each recess (or grid position), allowing different sets of antibodies to be used on different specimens on the same array of fastened or frozen specimens. This allows multiplexed specimen analysis, such as multiplexed antibody stainings. This allows, for example, a group of heterogeneous patient biopsies to be independently processed for tissue and patient specific disease markers. Parallel processing of multiple specimens, such as in the example of 72 brain organoids or 19 heterogeneous organ specimens (Fig. 1 & 2), also permits to simultaneously study heterogeneous *in vitro* and *in vivo* derived biological specimens, and to investigate the effects of genetic, chemical, or other perturbation treatments across multiple biological specimens. Furthermore, having heterogeneous organ tissues on one microscopy slide (such as in Fig. 2) can also provide a robust and cost-efficient system for antibody validation and specificity experiments. Another parallel use is an investigation of differentiation efficiency of multiple cell lines. Parallel processing significantly enhances the reproducibility and comparability, and prevents the occurrence of artefacts, which could potentially result from the sequential handling of specimens.

Carriers (MTMs or chips) and microscopy slides or other downstream tissue section holders could be of a size to fit to each other to simplify and scale specimen positioning for improved workflows in specimen preparation, which could be especially beneficial for positioning on barcoding chips in spatial transcriptomic workflows.

Adaptations to the staining procedure could be used to perform multiplexed antibody staining and thus label individual slices of specimens (tissues) with tissue specific antibody combinations.

Further adaptations to the shape and size of carriers and recesses could be used to process even more (or larger) specimens, which could even further decrease cost and labor. For particularly transparent or white specimens, or those which are hard to see, carriers in non-white colours (e.g. black) could be used, which could help to increase the contrast to the specimens. Furthermore, carriers and their recesses can be manufactured in various shapes, such as complex 3D shapes, which can hold specimens in space stereotypically, e.g. where all specimens are precisely positioned in the same orientation (such as in the example of a mouse brain), to cut precisely through the same positions of all specimens simultaneously. Finally, carriers can be reused (for years), e.g. when made out of extremely durable and deformation resistant PTFE, which drastically reduces plastic waste (and costs) in comparison to single-use plastic embedding molds.

As used herein, words of approximation such as, without limitation, "about", "substantial" or "substantially" refer to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skill in the art recognize the modified feature as still having the required characteristics and capabilities of the unmodified feature. In general, but subject to the preceding discussion, a numerical value herein that is modified by a word of approximation such as "about" may vary from the stated value by e.g. ±10%.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The "comprising" expressions when used on an element in combination with a numerical range of a certain value of that element means that the element is limited to that range and "comprising" relates to the optional presence of other elements. E.g. the element with a range may be subject to an implicit proviso excluding the presence of that element in an amount outside of that range. As used herein, the phrase "consisting essentially of" requires the specified integer(s) or steps as well as those that do not materially affect the character or function of the claimed invention. As used herein, the closed term "consisting" is used to indicate the presence of the recited elements only.

The present invention is further illustrated by the following figures and examples, without being limited to these embodiments of the invention.

### Figures

**Figure 1****: Multiplexed cryo-processing of tissue.**
   **A**, Schematic of conventional tissue processing for cryo-processing. Specimens are collected, processed and fixed, before being positioned in a mold, embedded using an optimal cutting temperature (OCT) compound which is then shock frozen (cryo-embedded) and sectioned with a cryostat (cryo-sectioned). Cryosections are then directly mounted to positively charged microscopy slides. **B**, Using MTMs, the process of cryo-embedding can be multiplexed at the stage of OCT embedding, which results in cryo-sections containing a multiplicity of tissue (up to 21x with molds used in this study). **C**, Processing of cerebral organoids with GFP, tdtomato or no fluorophore expression. Cerebral organoids (~3mm in size) were first engulfed in OCT (1), then positioned into an MTM mold with 6x3 grid (4 organoids per position) (2) and frozen on a metal block on dry ice (3). Tissue was sectioned in a cryostat (4) and mounted on positively charged microscopy slides (5). Fluorescence ficroscopy recordings for DAPI, GFP and tdtomato reveal correct positioning of all organoids (6).
**Figure 2****: Efficient multiplexed cryosectioning of 19 heterogeneous tissues.**
   **A-C,** Procedure of multiplexed tissue embedding in a 6x3 grid MTM. Colon and duodenum were co-embedded in one well. Femur, tail and spinal cord were pre-processed with decalcification solution. **D**, Whole-slide stitched microscopy image of an immunostaining for e-cadherin, MAP2, CK19 and DAPI. Individual tissues are labeled within the figure. **E**, Magnified recordings of all 19 tissues, displaying morphological features of individual organs.

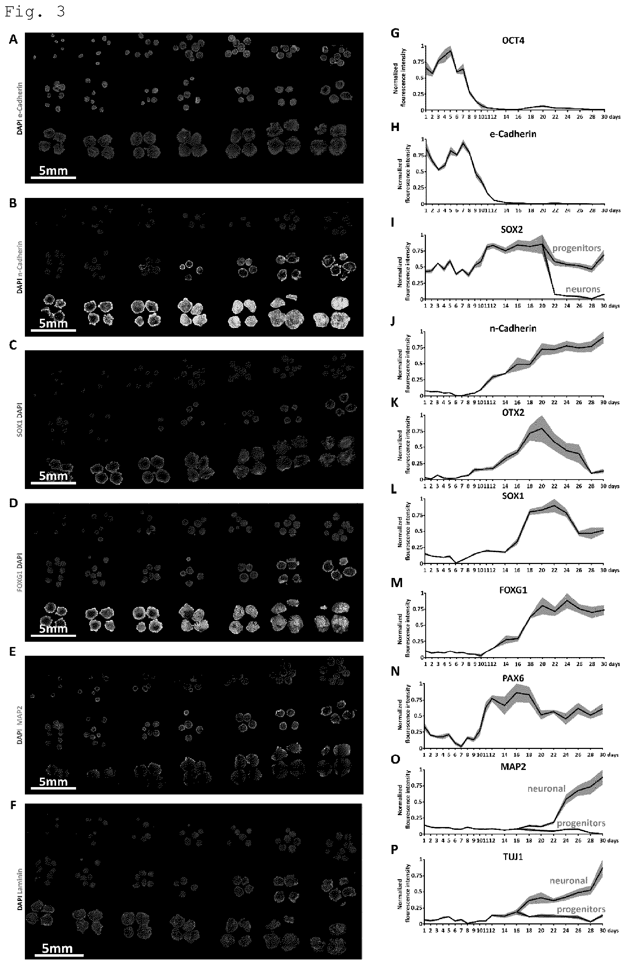

**Figure 3****: Time course of marker expression in cerebral organoids between day 1 and 30.**
   **A-E,** Immunolabeling for selected temporal markers of neural differentiation (e-cadherin, n-cadherin, SOX1, FOXG1, MAP2) which were expressed in the time course of organoid differentiation between day 1 and day 30. Selected time points were each day from day 1 to day 12 (before Matrigel embedding) and day 14 to day 30 every second day. **F,** Immunolabeling for laminin to display localization of Matrigel around and within organoid tissue. **G-P,** Quantification of fluorescence intensity of selected markers in the time course of cerebral organoid differentiation. For SOX2, MAP2 and TUJ1, fluorescence intensity was quantified for both neural progenitors and neurons after fluorescence intensity became distinguishable. Fluorescence intensity was referenced to DAPI intensity and normalized to the highest value in the time course. Grey bars display SEM.
**Figure 4****: MTM designs.**
   A: MTM designs for various tissue sizes and numbers, adjusted for regular size microscopy slides (25 x 75 mm with specimen area 25 x 55 mm).
**Figure 5****: Step-by-step documentation of MTM based multiplexed cerebral organoid embedding and cryo-sectioning.** Organoids expressed either GFP, tdtomato or no fluorophore (see Figure 1C, step 6).
**Figure 6****: Paraffin embedding using MTMs.**
   A, Top view of microtome sectioned organoids which were dehydrated, and paraffin embedded in MTMs and then sectioned on a vibratome and H&E stained. B, magnified view of indicated box in panel A.

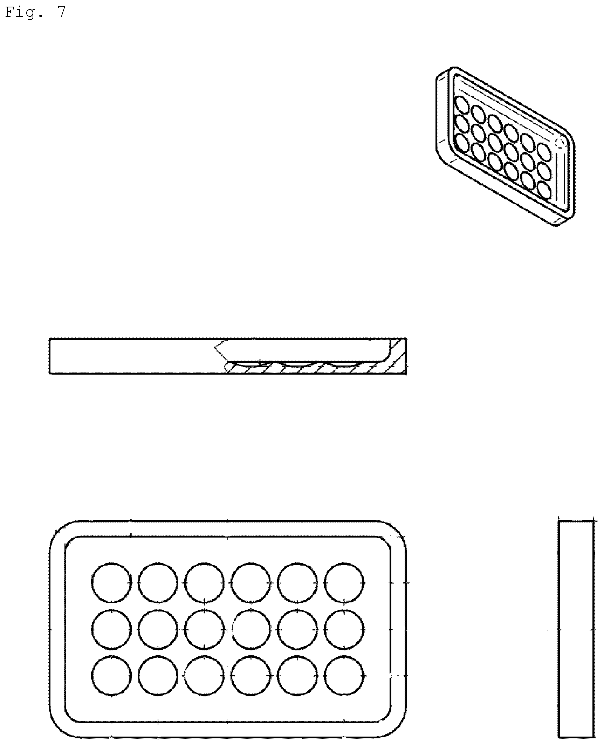

**Figure 7****: MTM schematic**
   top: perspective view; middle: side view showing recesses in bottom of the carrier and to the right the wall; bottom: view from above showing 3x6 recesses (shown as circles) and a surrounding wall (double encircling lines); right: side view from the right.

### Examples

The examples show a protocol for multiplexed cryo-processing of tissue, which reduces the cost (and processing time) of cryo-processing by up to 96%, while enabling the parallel analysis of tissues of different size and origin. The protocol is first illustrated by cryo-processing up to 72 cerebral organoids in parallel. Then, cerebral organoids are processed throughout differentiation and investigated neural differentiation marker expression, demonstrating that this protocol can simultaneously process heterogeneously sized tissue. Finally, the protocol is used to simultaneously process 19 different adult mouse-derived tissues to demonstrate that MTMs (multiplex tissue molds) can also be applied for paraffin embedding and sectioning. With the rise of organoid and 3D tissue culture technologies, comparisons across large sample numbers and sample groups become increasingly important. Such comparisons are ideally be performed in a single experiment, as even minor steps, such as antibody labeling on multiple slides can cause heterogeneous labeling when performed on multiple slides.

MTMs reduce labor, time, and costs to perform cryo-processing-based tissue analysis. Furthermore, MTM-derived tissue sections could be used for comparison of high sample numbers, organism-wide antibody validation experiments, as well as generating grids for defined tissue positioning - which is also relevant in e.g. spatial transcriptomic approaches using nucleic acid probes instead of antibodies. The invention allows direct comparison of antibody labeling by removing slide-to-slide variability and drastically reduces costs associated with labeling and analysis.

### Example 1: Material & Methods

### 1.2. Stem cell culture

The hESC line H9 (WA09, WiCell) as well as CAG-GFP and CAG-tdtomato (in WA09 genomic background) were cultured feeder-free on hESC-qualified Matrigel (Corning, Cat.# 354277) in mTESR1 (Stemcell Technologies, Cat.# 85875) in a cell culture incubator (humidified, 37°C, 5% CO₂). Cells were routinely tested for genome integrity and Mycoplasma contamination. Cells were split when colonies were not yet showing a dense colony core and before colony fusion, usually after 3-5 days. Splitting was performed by incubation in an incubator (humidified, 37°C, 5% CO₂) in DPBS^{-/-} containing 0.5 mM EDTA (DPBS: Thermo Fisher, Cat.# 14190250, EDTA: Sigma-Aldrich, Cat.# E6758) until cracks in the center of the colonies appeared (usually after 4-8 minutes). PBS was then aspirated and colonies gently washed off with 1 ml mTESR1. Stem cell tissue clumps were then transferred in a ratio of 1:6 to 1:10 into Matrigel coated plates. For Matrigel coating, 1 ml mTESR1 containing Matrigel was added to plates which were then incubated at 37°C for at least 30 min or alternatively sealed with Parafilm and stored in a fridge for up to 2 weeks. Before usage, fridge-cold plates were warmed in an incubator for at least 15 minutes.

### 1.2. Cerebral organoid generation

Organoids have been generated as reported before (Reumann, D. et al. Nature Methods 2023 20:12, 2034-2047). An overview of used media can be found below ("Organoid media" section). In brief, human embryonic stem cells were used 2-3 days after splitting. Cells were rinsed once with PBS and then incubated with 600 µl Accutase (Sigma-Aldrich, Cat.# A6964) (volume for a well of a 6-well plate) until all cells detach after slightly tapping the side of the plate. Cells are then gently pipetted up and down using a P1000 pipet tip and transferred into a 15 ml falcon tube with 9 ml mTESR1. Cells are then centrifuged at 200 g for 5 min and the cell pellet is resuspended in 1 ml mTESR1 containing 1:100 ROCK (Rho kinase) inhibitor (RI) Y27632 (Selleck Chemicals, Cat.# S1049) and counted using a Countess 3 cell counter. Cells were only used if the live count was >90%. 9,000 hESCs were transferred into 150 µl stem cell media (1:100 RI and optional PenStrep) per well (e.g. for a 96 well plate, 100 wells were prepared, which corresponds to 15 ml mTESR1 and 900,000 cells). Media was gently mixed and pipetted into ultra-low attachment plates (Thermo Fisher Scientific, Cat.# 136101 and Corning Cat.# 7007) and incubated in a tissue culture incubator for 3 days. 100 µl of media was exchanged on day 3 with 150 µl of fresh mTESR1 (without RI). On day 5, 7, 9 (optional: day 11), 150 µl of media were exchanged with Neural Induction (NI) media. On day 11-13, up to 30 embryoid bodies (EBs) were transferred into 10 cm plates which were coated prior with anti-adherence rinsing solution (Stemcell Technologies, Cat.# 07010). 10 ml Improved-A media containing 2% Matrigel (Corning, Cat.# 356235, added to cold media and used within 1h) was then added to the EBs. For further differentiation of brain organoids, media was exchanged after 3 days with Improved -A media without Matrigel, with changing to Improved +A media around day 16. Organoids were transferred to orbital shakers (Inforce Celltron HT) with reduced shaking speed (42 rpm) on day 20. From the timepoint organoids were transferred on the shaker, 30 ml of media was added per 10 cm plate.

### 1.3. Organoid media

**Neural induction (NI) media:** DMEM/F12 (Invitrogen, Cat.# 11330-057), 1% N2 Supplement (ThermoFisher, Cat.# 17502001), 1% GlutaMAX-I (ThermoFisher, Cat.# 35050-038), 1% MEM-NEAA (Sigma-Aldrich, M7145), 1:1000 Heparin solution (Sigma-Aldrich, Cat.# H3149-100KU), 1% PenStrep (Sigma-Aldrich, Cat.# P4333) **Improved-A media:** 50:50 DMEM/F12:Neurobasal (Gibco, Cat.# 21103049). 0.5% N2 supplement, 2% B27-A (ThermoFisher, Cat.# 12587010), 1:4000 Insulin (Sigma-Aldrich, Cat.#I9278), 1% GlutaMAX, 0.5% MEM-NEAA, 1% Antibiotic-Antimycotic (ThermoFisher, Cat.# 15240062)

**Improved +A media:** 50:50 DMEM/F12:Neurobasal (Gibco, Cat.# 21103049). 0.5% N2 Supplement, 2% B27+A (ThermoFisher, Cat.# 17504044), 1:4000 Insulin (Sigma-Aldrich, 19278), 1% GlutaMAX, 0.5% MEM-NEAA, 1% Antibiotic-Antimycotic (ThermoFisher, Cat.#15240062), 1% Vitamin C solution (40mM stock in DMEM/F12) (Vitamin C: Sigma-Aldrich, Cat.# A4544), 1 g/liter sodium bicarbonate (Sigma-Aldrich, Cat.# S5761)

### 1.4. Mouse tissue

One individual Black6 mouse (male) was first euthanized with Ketamin/Xylazin, then perfused into the heart with PBS and 4% PFA. Tissue biopsies of selected organs were then taken and processed as described below.

### 1.5. Tissue preparation

Tissue was fixed in 4% formaldehyde solution in PBS at room temperature for 4 h on a tube rotator or at 4°C overnight. Optionally, tissue containing bone was extensively rinsed in PBS and then, after formaldehyde is no longer present, transferred into decalcification solution (Sigma-Aldrich, Cat.# D0818) for 1 h (note: decalcification times are tissue dependent).

After fixation (and optional decalcification), tissue was either rinsed with PBS and stored at 4°C, or directly transferred into 30% sucrose in PBS for cryoprotection and transferred onto a tube rotator or a Tilt/roller mixer at 4°C overnight.

### 1.6. Multiplex tissue mold embedding

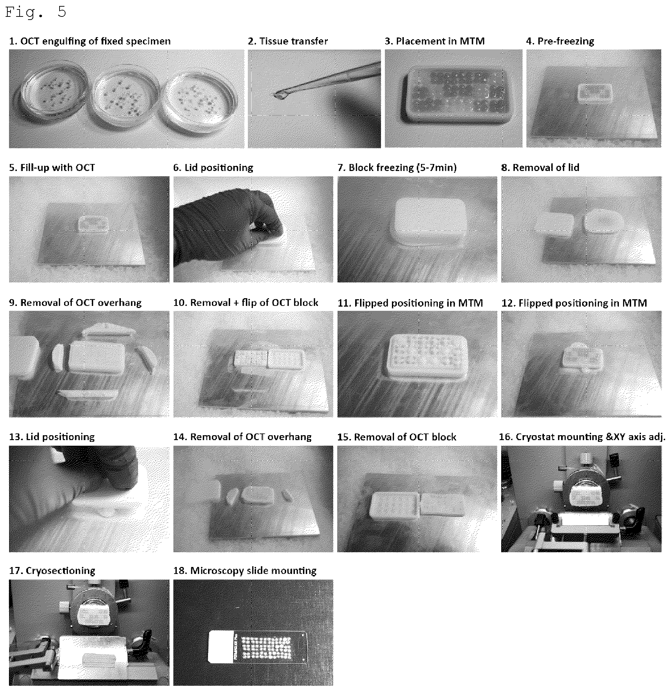

Tissue was processed as depicted in Figure 5. First, a box of dry ice was prepared with a flat metal block inside, which was allowed to cool down prior to usage. Tissue was first transferred into wells or plates which were pre-filled with liquid embedding compound "OCT" ("optimum cutting temperature", Sakura Finetek Tissue-Tek O.C.T. Compound, Fisher Scientific Cat.# 12351753). The tissue was then gently moved around in OCT using a P200 or P1000 pipet tip until water swirls were no longer visible. This step was repeated again after 2 min to guarantee adequate engulfment of tissue with OCT. Tissue was then transferred into a MTM ("multiplex tissue mold") with either a P200 or P1000 (dependent on tissue size) as seen in step 2 of Figure 5, while aiming to reduce the amount of transferred OCT as much as possible. Dependent on size of the specimen and experimental setup, either individual specimen or whole specimen groups were transferred together into one recess. Notably, the transfer process should be performed quickly, as OCT will dry out over time. It is recommended to position specimens in a pattern into the MTM that cannot be mirrored along the horizontal or vertical axis to prevent miss-identification of tissues after sectioning (unless a tissue identifier, such as a fluorophore or different tissue morphologies are present). Notably, for very small structures (~500 µm or smaller) it is particularly recommended to transfer only very small volumes of OCT, as an overfilling of OCT might result in leaking of OCT into other recesses, which can carry small tissues with it and might mix up sample groups. After tissue transfer, the MTM with tissue was positioned on a metal block on dry ice until the OCT in all (!) recesses starts to freeze on the outside. The freezing step is preferably balanced: ideally, a ring of frozen OCT appears on the outside of each recess, and the tissues should not be completely frozen as this might cause not adequate combination with the rest of the OCT block in the next step. When a ring of OCT appears on all tissues, the MTM is filled or slightly overfilled with OCT and the lid is pressed on. The MTM is then surrounded with dry ice for faster freezing. After 5-7 min, the lid should easily come off the MTM. If the lid does not separate, the block should be kept further on dry ice for another minute. The OCT overhang can be broken off and the OCT block containing the specimen can be taken out of the MTM by slightly bending the MTM on one side, until the OCT block detaches. After removal of potentially overhanging OCT, the block is then flipped around and positioned back into the MTMs. The surface is then slightly melted using either a heat gun or gently touching with the palm of a hand. Note that in this step, the aim is not to melt the block at all, but only create a very fine layer of slightly molten OCT on the outside of the block. More OCT is then added on top of the block and the lid is carefully pressed on. Too much melting of OCT might result in slightly damaged tissue for the first sections, however subsequent sections will not be damaged. The block is then allowed to freeze fully again (3-4 min, optionally the block can be surrounded with dry ice) and the lid is removed again. After removal out of the MTM and trimming off the OCT overhang with a scissor, the OCT block can be either processed directly in a cryostat or wrapped in aluminum foil and stored below -70°C for several months.

### 1.7. Cryo-sectioning & slide storage

Cryo-sectioning was performed using an Epredia CryoStar NX70 cryostat microtome (Fisher Scientific). Cryo-sections were performed at approximately -13°C to -1°C (dependent on cryostat, humidity, chamber temperature, controllable features such as blade and specimen temperature, this temperature might change significantly and must be optimized). Sections were then flipped and transferred onto positively charged microscopy slides. Microscopy slides were then dried in a slide box overnight and stored long-term at -20°C.

### 1.8. Multiplex embedding in paraffin

For Paraffin embedding, the tissue was first dehydrated in a series of diluted ethanol (30%, 50%, 70%, 100% in water) and then positioned in an MTM. Molten paraffin wax was then slowly added to the tissue and solidified by cooling it down. More paraffin was added on top when solidification started, as paraffin significantly shrinks when solidifying. After cooling in a fridge, the paraffin block was taken out, flipped around and warmed up to room temperature. More paraffin was added on top, and the lid was applied to generate a flat surface. Notably, in this step the paraffin wax should be close to the melting point (dependent on the wax, 48-66°C) to prevent extensive liquification of already solidified paraffin. The block with the lid is then positioned in a fridge to solidify. After cooling down, the paraffin block can be taken out of the MTM and processed by sectioning on a vibratome.

### 1.9. Immunohistochemistry

For antibody labeling, slides were thawed and dried at room temperature for at least 1 h. Slides were then transferred into a slide rack in PBS and transferred onto an orbital shaker with slow rotation speed for 5 min to gently wash off OCT. Permeabilization and blotting was performed using perm/blot solution (PBS with 5% BSA (Thermo Fisher, Cat.# 11021037) and 0.3% TX100 (Sigma-Aldrich, Cat.# 93420), sterile filtered and frozen until use) which is directly pipetted onto the slides in a humidified staining chamber and incubated for 30 min to 2 h. Primary antibodies were prepared in antibody staining solution (PBS with 5% BSA and 0.1% TX100, sterile filtered and frozen until use) at desired dilution (see antibody table below). Primary antibody solution was added after removal of perm/blot solution in a cold-room (4°C) and 200-300 µl of antibody solution was used per slide. After incubation overnight in a humidified chamber, the slides were transferred into a slide rack and rinsed 3x with PBS. Then, the slides were washed 3x in PBS-T (PBS and 0.01% TX100) for 10-15 min per wash. Secondary antibodies were prepared in a 1:500 dilution in staining solution and slides were incubated with secondary antibodies for 2 h at room temperature in a humidified chamber. The antibody solution was then removed from the slide and DAPI (2 ug/ml in PBS) was added onto the tissue for 7min at room temperature in a humidified chamber. Slides were then rinsed 3x in PBS and washed 2x in PBS-T and one last time in PBS without TX100. Slides were then mounted using DAKO mounting media (Agilent, Cat.# S3023) and dried at room temperature for at least 4 h. Slides were stored at 4°C until performing microscopy.

**Table: Antibodies**

| Primary Antibodies | | | | |
|---|---|---|---|---|
| **Species** | **Antigen** | **Producer** | **Cat. #** | **Dilution used** |
| Mouse | E-Cadherin | BD Biosciences | 610182 | 1: 100 |
| Rabbit | CK19 | Abeam | AB52625 | 1:500 |
| Rabbit | OCT-4 | Cell Signaling Technology | C30A3 | 1:100 |
| Goat | SOX2 | R&D Systems | AF2018 | 1:100 |
| Mouse | n-Cadherin | BD Biosciences | 610920 | 1: 500 |
| Goat | OTX2 | R&D Systems | AF1979 | 1:100 |
| Goat | SOX1 | R&D Systems | AF3389 | 1:500 |
| Rabbit | FoxG1 | Abeam | ab18259 | 1:200 |
| Sheep | PAX 6 | R&D Systems | AF8150 | 1:200 of 100 µl reconstitute |
| Chicken | MAP 2 | Abeam | ab5392 | 1:500 |
| Mouse | TUJ1 (βIII-tubulin) | Sigma-Aldrich | T8578-100UL | 1:500 |

### Secondary Antibodies (host: Donkey)

| **Anti** | **Fluorophore** | **Producer** | **Cat. #** | **Dilution used** |
|---|---|---|---|---|
| Mouse | AF488 | Invitrogen | A21202 | 1:500 |
| Mouse | AF568 | Invitrogen | A10037 | 1:500 |
| Mouse | AF647 | Invitrogen | A31571 | 1:500 |
| Rabbit | AF488 | Invitrogen | A21206 | 1:500 |
| Rabbit | AF568 | Invitrogen | A10042 | 1:500 |
| Rabbit | AF647 | Invitrogen | A31573 | 1:500 |
| Chicken | AF488 | Jackson ImmunoResearch | 703-545-155 | 1:500 |
| Chicken | AF647 | Jackson ImmunoResearch | 703-605-155 | 1:500 |
| Sheep | AF488 | Invitrogen | A11015 | 1:500 |
| Sheep | AF568 | Invitrogen | A21099 | 1:500 |
| Sheep | AF647 | Jackson ImmunoResearch | 713-605-147 | 1:500 |
| Goat | AF488 | Invitrogen | A11055 | 1:500 |
| Goat | AF568 | Invitrogen | A11057 | 1:500 |
| Goat | AF647 | Invitrogen | A21447 | 1:500 |

### 1.10. Microscopy

Microscopy was performed using an Olympus Spinning Disk system based on the Olympus IX3 Series (IX83) inverted microscope. The system is equipped with a Yokogawa W1 spinning disk unit using 405 nm, 488 nm, 561 nm and 640 nm lasers and a dual Hamamatsu Orca Flash 4.0 camera for recording. The objectives used were 10x/NA0.3 (air) with a working distance (WD) of 3.1 mm and 20x/NA0.75 (air) WD 0.6 mm.

### 1.11. Image processing

Images were processed using the FIJI distribution of the open-source image processing application ImageJ (v1.53q).

### Example 2: Design considerations for MTMs.

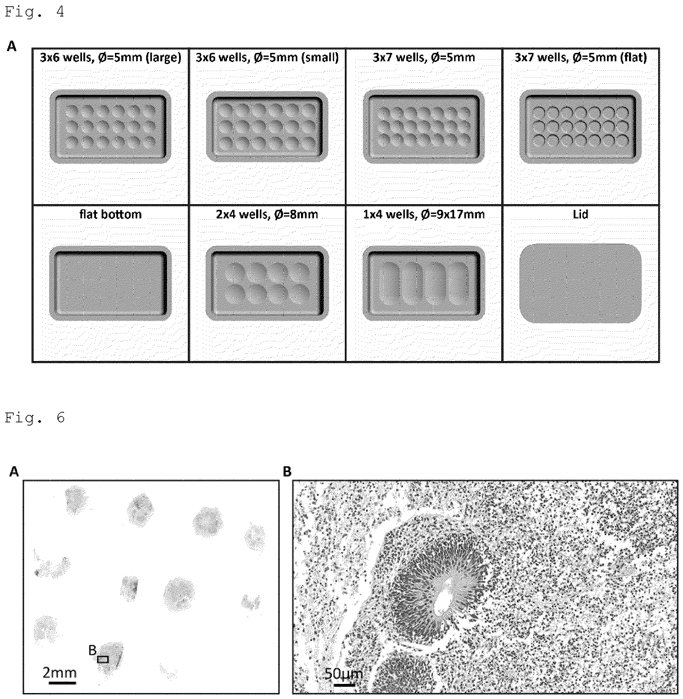

Commercially available embedding systems for cryo-processing focus on either individual tissue group blocks (Figure 1A) or biopsy punch embedding ("tissue (micro)arrays" Kononen, J. et al. Nature Medicine 1998 4:7, 844-847). While tissue arrays allow the embedding of many tissues simultaneously, they have the limitation that the tissues must then be repeatedly thawed during cryo-sectioning to allow for the OCT and tissue to attach - which can cause both drastic damage to the tissue and reduce the speed of tissue processing. Furthermore, tissue arrays do not allow for modified shapes and sizes of tissue, but are limited to the selected size of a biopsy puncher. We aimed to develop a method for simultaneously embedding multiple tissues into a single cryo-block to enable serial processing of many tissues (Figure 1B). We additionally aimed for simultaneous freezing of the tissue and the surrounding embedding compound, removing the necessity of repeated thawing for cryosections. We designed the cryo-molds using polytetrafluoroethylene (PTFE), which has ideal anti-adherence characteristics, adequate thermal conductivity (0.292 W/(m*K)), and its high robustness allows the molds to be re-used virtually indefinitely (the first engineered MTMs have now been re-used for more than 4 years without impairments, and not a single MTM becoming dysfunctional to date). The detailed protocol for MTM assisted cryo-processing can be found in Figure 5 and in Example 1. In brief, the tissues are fixed, cryoprotected in 30% sucrose, transferred into embedding compound, like OCT, and then transferred onto an MTM. The blocks are partially pre-frozen, filled with OCT, and then frozen completely. The frozen OCT block is then taken out of the mold, flipped upside down, and placed back into the MTM. The surface is then slightly heated (but not to the point of melting the block), more OCT is added, and a lid is pressed on to create a flat surface. After trimming overhanging OCT, the blocks are ready for cryo-sectioning. As a proof of principle, we embedded a total of 72 cerebral organoids (2-3 mm in size, 4 per recess in a 6x3 MTM) with either constitutive GFP (CAG-GFP), tdtomato (CAG-tdtomato), or no fluorophore, cryo-sectioned, and immunolabeled for GFP, tdtomato, and DAPI. Confocal spinning disk microscopy then demonstrated appropriate tissue positioning (Figure 1C). Additionally, we successfully tested the compatibility of MTMs with paraffin embedding and sectioning, as indicated by H&E staining of vibratome sectioned organoids (Figure 6). Thus, MTMs can be used to section both cryo-preserved as well as paraffin embedded tissues in an upscaled manner.

### Example 3: MTMs can be used to process heterogeneous tissues.

To investigate if MTMs can be used to process heterogeneous tissues, we selected 19 mature mouse-derived tissue samples (femur, pancreas, skin, spleen, cerebellum, olfactory bulb, tail, testis, spinal cord, liver, stomach, eye, muscle (hindleg), colon & duodenum, kidney, heart, salivary gland, and cortex) and processed them using MTMs (Figure 2A-C). To demonstrate the flexibility of grouping tissues, the colon and duodenum were co-embedded in the same position. Immunolabeling for e-cadherin, MAP2, CK19, and DNA (DAPI) revealed that MTM blocks can be used for simultaneous cryo-processing of diverse, heterogeneous tissues (Figure 2D). Notably, all tissues remained intact, and tissue-specific morphologies and marker expression were readily observable (Figure 2E). In summary, MTMs can be used for upscaled cryo-processing of tissues with heterogeneous features.

### Example 4: MTMs can be used to process heterogeneously sized tissue and to perform protein expression assays.

We next investigated if MTMs could be used to process heterogeneously sized tissue. Cerebral organoids were grown for 1 to 30 days, fixed, and cryo-processed using MTMs. In total, 21 groups were analyzed (daily from day 1-12 and every two days from day 14-30). After processing in 3x7 MTMs, tissues from all time points were present in the resulting cryosections (Figure 3A). We next investigated whether such tissues could be used to cost-effectively investigate temporal expression of proteins. We performed fluorescent immunohistochemistry with a range of markers associated with neural differentiation (Figure 3A-D) and performed microscopy using an Olympus IX83 inverted Spinning Disk microscope with low magnification objective (10x) (Figure 3A-E). Immunohistochemistry against Laminin clearly indicated the timepoint of the laminin-rich Matrigel addition to the media (day 12), but also surprisingly revealed the continued presence of Matrigel around neuroepithelial rosettes at later stages (Figure 3F). MTMs can also be used with different embedding compounds, such as paraffin. Paraffin-embedded vibratome sections are shown in Figure 6.

We next quantified temporal fluorescence intensity of ten markers associated with differentiation from pluripotent stem cells along the neural linages (OCT4, e-Cadherin, SOX2, n-Cadherin, OTX2, SOX1, FOXG1, PAX6, MAP2, TUBB3 (TUJ1)) throughout the time course of cerebral organoid development and corrected for DAPI intensity (Figure 3G-P). We readily observed a decline of the pluripotency marker OCT4 as well as the stereotypic e-cadherin to n-cadherin switch when differentiating pluripotent stem cells towards neural stem cells and neurons (Figure 3F, G, I). The pluripotency and neural stem cell marker SOX2 remained highly expressed, although at higher levels in neural stem cells, while SOX2 protein was absent in neurons (Figure 3H). The forebrain and midbrain neural progenitor marker OTX2 became upregulated in a similar temporal manner to n-cadherin. However, at least in a forebrain context, OTX2 expression seemed to be reduced in later forebrain differentiation (Figure 3J). Interestingly, we found that SOX1 expression correlated with the expression of the forebrain marker FOXG1 and the neural stem cell (and later cortical progenitor marker) PAX6 (Figure 3K-M). The neural markers MAP2 and TUJ1 were first upregulated in neural populations around day 16, with a clear expression in neurons but not in progenitors (Figure 3N,O). In summary, MTMs allow fast and effective processing of heterogeneously sized tissue and enabled the analysis of stem cell aggregate expression profiles as they developed towards neural stem cells and neurons, thus permitting time course analyses of tissues on a single slide.

### Example 5: MTMs drastically reduce cost and labor.

We next calculated the cost of consumables associated with cryo-processing in the preceding analysis (Figure 3). For consumables such as antibodies, media, and slides, aliquot costs were estimated (Table: Antibodies). While fluorescence immunohistochemistry allows for multiple antibody labels per slide, this could cause significant price heterogeneity (e.g. if two antibodies are derived from the same species, independent slides would have to be labeled). We therefore calculated the use of one individual antibody per slide. In total, the price for consumables for the preceding analysis was 5.16€ (OCT), 5.11€ (microscopy slides), 2.05€ (antibody solution), 2.07€ (blot/perm solution), 2.13€ (PBS-T), 3.88€ (PBS), 33.33C (primary antibodies), 2.18C (secondary antibodies), 1.52€ (coverslips) and 7.33€ (mounting media). Thus, for the analysis of protein expression of 10 proteins across 21 time points, with 4-10 samples per timepoint, the total cost of consumables was only about 65€ (6.50€/slide). For one individual tissue group (3x7-MTM), the cost of all analysis was only around 3€, and for one individual organoid (of all ~114 organoids of this experiment) approximately 0.57€. With antibody multiplexing (e.g. 3 antibodies/slide with 4 total slides), the price for the entire analysis of Figure 3 (10 antibodies on 4 slides) could be further reduced to below 50€. In contrast, a similar analysis using conventional processing (Figure 1A) would cost between 1,440€ (one antibody per slide, 210 slides) and 1,108€ (2-3 antibodies per slide, ~84 slides) for 10 antibodies on 21 tissues / tissue groups. Thus, the usage of MTMs results in a 96% reduction in the cost of consumables.

Furthermore, processing of all tissues simultaneously, compared to individual processing, reduces the time spent on performing cryo-sectioning by up to 95%, with a similar increase in efficiency in tissue labeling and analysis, while being easier to handle in comparison to regular OCT blocks due to the increased size of the sections and defined tissue negative borders of the section. Scanning 4 slides versus 84 (or 10 vs 210 slides, if antibodies are not multiplexed) will be a dramatic time improvement in any scientific or diagnostic setup: scanning 4 slides takes approx. 2 h of recording time (30 min/slide), whereas 84 slides would take 1.7 days of pure recording - excluding the slide setup in between. Similarly, when only one antibody per slide is used, the recording time differs between 5 h (MTM) vs. 4.4 days (individual tissues) of pure recording time.

In summary, MTMs drastically reduce the costs of cryo-sectioning and speed up tissue analysis, making MTMs an ideal solution for cost-efficient and high-throughput tissue analysis.

### Discussion

The examples demonstrate the invention using MTM variants which have the capacity for 4 to 21 specimens (or specimen groups) and which easily fit on regular microscopy adhesion glass slides (75x25 mm) by processing up to 72 specimens (4 specimens per position in an 6x3 MTM) simultaneously. The wide applicability of this method is demonstrated in both a time course experiment for protein expression during early stages of neurogenesis in differently sized cerebral organoids, as well as the simultaneous processing of 19 different mouse tissue samples, proving that MTMs can be used for tissue sections ranging from soft brain to (decalcified) bone. This method can cut tissue processing and labeling costs by up to 96% in comparison to serial tissue processing while also drastically reducing processing and analysis time, and with the potential of even further savings enabled by scaled up versions of these designs.

The invention provides a streamlined, straightforward solution to high-throughput tissue processing which permits cost-efficient generation of multiplexed cryo-sections. While cryo-sections are the gold standard for antibody labeling or *in-situ* hybridization (ISH) based tissue analysis as well as spatial transcriptomics, the time-consuming processing of tissue processing as well as expensive components hinder this technique's wider adoption in basic research and in making cryo-sectioning and immunohistochemistry a routine application in diagnostics. We show that multiplexing with MTMs dramatically reduces the time and cost of cryo-sectioning, which will help laboratories in both research and diagnostic environments drastically reduce costs. The general workflow of MTMs is compatible with tissue processing for ISH based methodologies which would enable high-throughput transcriptomic readouts. MTMs could also easily be adapted to be used e.g. for precise positioning of tissue sections for spatial transcriptomics approaches.

Compared to TSMs, the method offers several advantages. Among others, it enables a significantly quicker processing of samples and eliminates the need for repeated freeze-thaw cycles, thereby preserving the integrity of the samples. It also accommodates the processing of samples of varying sizes and shapes, and ensures the formation of genuinely homogeneous arrays. The method increases reproducibility (i.e. avoidance of slide-to slide variability) and comparability of fastened biological samples.

Furthermore, the stereotypic positioning of tissues in MTM-derived sections permits the development of automated pipelines to detect tissues in specific positions and process/analyze them separately. Developing automated tissue processing based on MTMs, as well as AI-assisted algorithms for image analysis and interpretation, can further reduce the cost associated with tissue analysis, particularly in diagnostics laboratories.

## Claims

1. A method for generating an array of fastened specimens comprising the steps of
providing a carrier with a bottom surface that comprises an array of at least two recesses,
placing at least two specimens on the carrier at the recesses, filling the carrier at least in the space between the specimens with a embedding compound,
solidifying the embedding compound and fastening the specimens in the embedding compound,
thereby generating an array of fastened specimens in a block of solidified embedding compound.

2. The method of claim 1, wherein the carrier has a wall surrounding the bottom surface with the recesses, and wherein the method comprises filling a space between specimens and the wall with embedding compound.

3. The method of claim 1 or 2, comprising placing a cover sheet on top of the carrier with the specimens and the embedding compound, preferably wherein the space between the bottom surface and/or recesses of the carrier and the cover sheet is filled with embedding compound.

4. The method of any one of claims 1 to 3, wherein the method comprises removing the block of solidified embedding compound from the carrier, and filling a space between elevations with embedding compound, which elevations correspond to the filled recesses.

5. The method of claim 4, wherein the removed block is flipped over and the flipped block is placed into a carrier with walls that fit the block, then the space between elevations is filled with embedding compound; preferably wherein a cover sheet is placed on the flipped block with filled spaces.

6. The method of any one of claims 1 to 5, wherein the step of solidifying the embedding compound and fastening the specimens in the embedding compound is a step of freezing the embedding compound and the specimens, thereby generating an array of frozen specimens in a block of frozen embedding compound.

7. The method of any one of claims 1 to 6, wherein the carrier has a bottom surface with an array of at least four, even more preferred at least eight, recesses.

8. The method of any one of claims 1 to 7, wherein the recesses have a depth relative to the bottom surface of 0.1 mm to 10 mm.

9. The method of any one of claims 1 to 8, wherein the embedding compound comprises polyvinyl alcohol and/or polyethylene glycol, paraffin, agarose, or gelatine.

10. The method of any one of claims 1 to 9, wherein the carrier is flexible with a Young's modulus of elasticity of 0.1 MPa to 4,000 MPa, preferably 100 MPa to 1,000 MPa, at 20°C; and/or wherein the carrier contains polytetrafluoroethylene.

11. The method of any one of claims 1 to 10, wherein placing at least two specimens on the carrier at the recesses comprises a step of pre-fastening the at least two specimens on the carrier with a layer of embedding compound, preferably wherein this pre-fastening step is performed before the step of filling the carrier at least in the space between the specimens with a embedding compound.

12. The method of any one of claims 1 to 11, comprising removing the block of solidified embedding compound from the carrier and reusing the carrier for another iteration of generating an array of fastened specimens.

13. The method of any one of claims 1 to 12, comprising cutting one or more slices from the block wherein the slices comprise parts of the specimens of the array.

14. An array of fastened specimens in a block of solidified embedding compound generated by a method of any one of claims 1 to 13.

15. A kit comprising a carrier with a bottom surface that comprises an array of at least two recesses and the carrier further comprises a wall surrounding the bottom surface; and the kit further comprising embedding compound selected from polyvinyl alcohol and/or polyethylene glycol, glycol, paraffin, agarose, or gelatine.
